# FASCICULE DE BREVET EUROPEEN

(11) **EP 1 456 133 B1**
(45) Date de publication et mention de la délivrance du brevet: **19.10.2005**
(21) Numéro de dépôt: 02805402.1
(22) Date de dépôt: 19.12.2002
(51) Int. Cl.: C02F 1/52

(54) **PROCEDE DE TRAITEMENT D EAU PAR FLOCULATION LESTEE ET DECANT ATION**
VERFAHREN ZUR BEHANDLUNG VON WASSER DURCH BALLASTIERTES AUSFLOCKEN UND DEKANTIEREN
METHOD FOR TREATING WATER BY BALLASTED FLOCCULATION AND DECANTATION

(30) Priorité: 21.12.2001 FR 0116777
(43) Date de publication de la demande: 15.09.2004
(73) Titulaire: OTV S.A., 94417 Saint-Maurice Cédex (FR)
(72) Inventeur: BINOT, Patrick, F-77600 Rentilly par Bussy St Georges (FR); DAHL, Claus, Poulsen, DK-2640 Hedehusene (DK); ZUBACK, Joe, CAMARILLO, CA 93012 (US)
(74) Mandataire: Larcher, Dominique
(86) Numéro de dépôt international: PCT/FR2002/004471
(87) Numéro de publication internationale: WO 2003/053862

(56) Documents cités:
- FR-A- 2 785 899
- US-A- 4 675 112
- US-A- 6 010 631

## Description

La présente invention concerne le domaine du traitement de l'eau. Plus précisément, l'invention concerne un procédé de séparation solide- liquide par floculation et décantation, notamment dans le domaine du traitement des eaux.

Le traitement des eaux, particulièrement pour le cas du traitement d'eaux de surface à potabiliser et d'eaux usées urbaines ou industrielles à dépolluer, utilise fréquemment un procédé consistant à coaguler l'eau à traiter avec un réactif coagulant souvent constitué d'un sel de métal trivalent, à floculer l'eau coagulée avec un réactif floculant constitué usuellement d'un polymère organique, et à décanter les flocs formés dans un décanteur, les boues étant extraites en fond de décanteur, et l'eau traitée extraite en surverse de décanteur.

L'invention traite plus particulièrement de la technologie dite de floculation-décantation à flocs lestés, qui met en oeuvre un lest constitué d'un matériau granulaire fin et de forte densité tel que du microsable par exemple, injecté dans ou en amont de la zone de floculation, afin d'augmenter la vitesse de formation des flocs en servant d'initiateur de floculation, et également d'augmenter par accroissement de leur densité la vitesse de décantation des flocs formés durant la phase de floculation, ce qui permet de diminuer la taille des ouvrages.

Le microsable, de diamètre moyen compris entre 20 et 300 micromètres environ, 80 et 200 micromètres le plus souvent, est le ballast utilisé le plus fréquemment pour des raisons de disponibilité et de coût.

Le ballast est usuellement, pour des raisons économiques de réutilisation, séparé des boues extraites de l'ouvrage de décantation et recyclé dans le procédé.

Les pertes en ballast se répartissent usuellement entre les pertes par l'eau traitée et les pertes avec les boues extraites des ouvrages.

Une injection de ballast frais destiné à compenser les pertes de ballast est prévue en un point quelconque du circuit où passe le ballast.

Les pertes en ballast entraîné avec les boues sont importantes à maîtriser, tant pour minimiser des dépenses en ballast frais que pour ne pas dégrader la qualité des boues extraites.

Les moyens utilisés pour séparer le ballast des boues extraites et recycler ce ballast dans le procédé en minimisant les pertes de ballast sont en général choisis parmi les techniques de séparation gravitaire statique (comme la décantation) ou dynamique (comme la centrifugation et le cyclonage), le plus souvent par hydrocyclonage du mélange boues/ballast.

Les pertes de ballast dans la surverse de l'hydrocyclone, moyen le plus souvent utilisé pratiquement pour séparer le ballast des boues extraites, sont en général et pour une géométrie d'hydrocyclone et des conditions opératoires fixées, approximativement proportionnelles à la concentration du ballast dans le mélange entrant dans l'hydrocyclone.

C'est ainsi que, si un débit donné de boues contenant du ballast est à traiter dans un hydrocyclone donné, les pertes de ballast en surverse de l'hydrocyclone sont approximativement doublées si la concentration de ballast dans les boues est doublée, tous autres paramètres opératoires restant constants par ailleurs.

Les matières en suspension des boues, qui sont très fines, ne sont pratiquement pas séparées par des moyens comme les hydrocyclones utilisés classiquement, sauf à utiliser des hydrocyclones de très petite taille comportant de forts risques de bouchage des sousverses et non utilisés pratiquement : le flux de matière en suspension des boues se partage entre sousverse et surverse de l'hydrocyclone approximativement dans le même ratio que le débit hydraulique de sousverse et celui de surverse.

C'est ainsi que pour un débit de 40 m³/h contenant 3000 kg/h de ballast et 400 kg/h de MES (matières en suspension) de boue, entrant dans un hydrocyclone avec un pouvoir de coupure de 99,9% sur le ballast utilisé, et une répartition de débit de 20% en sous verse et 80% en surverse, une perte en ballast de l'ordre de 3 kg/h est à prévoir en surverse, et les boues se répartiront approximativement à hauteur de 80 kg MES/h en sousverse et 320 kg MES/h en surverse.

Si le même débit est passé dans un hydrocyclone répartissant le débit à hauteur de 40 % en sousverse et 60 % en surverse (en utilisant par exemple un ratio différent de diamètres de surverse et de sousverse), les boues se répartiront approximativement à hauteur de 160 kg MES/h en sousverse, et 240 kg MES/h en surverse : par rapport à la première configuration, la quantité de boues recyclées sera plus grande.

La seconde configuration d'hydrocyclone sera donc choisie lorsqu'on cherche à augmenter le débit de recirculation de boues, mais nécessitera usuellement une plus grande pression d'entrée dans l'hydrocyclone (et donc une plus grande dépense d'énergie) pour maintenir la perte de ballast à un niveau acceptable.

La courbe de partage d'un hydrocyclone représente la probabilité de passage d'un grain dans la sousverse en fonction de son diamètre. On notera que cette courbe est d'autant meilleure (plus forte probabilité de passer en sousverse pour un diamètre de grain donné) que la concentration en solide (principalement ballast, mais aussi boues) et la viscosité dans l'alimentation diminuent.

Les risques de dysfonctionnement d'un hydrocyclone augmentent rapidement au-delà d'une concentration donnée de solide dans la sousverse (souvent autour de 40 % de solide en volume).

Enfin, des pertes en ballast importantes peuvent avoir lieu lorsque la sousverse de l'hydrocyclone est bouchée, le ballast partant alors en surverse.

La technologie de floculation décantation lestée est notamment décrite dans les brevets suivants :
- le brevet FR 2627704 publié le 1er septembre 1989 ;
- le brevet FR 2719234 publié le 3 novembre 1995.

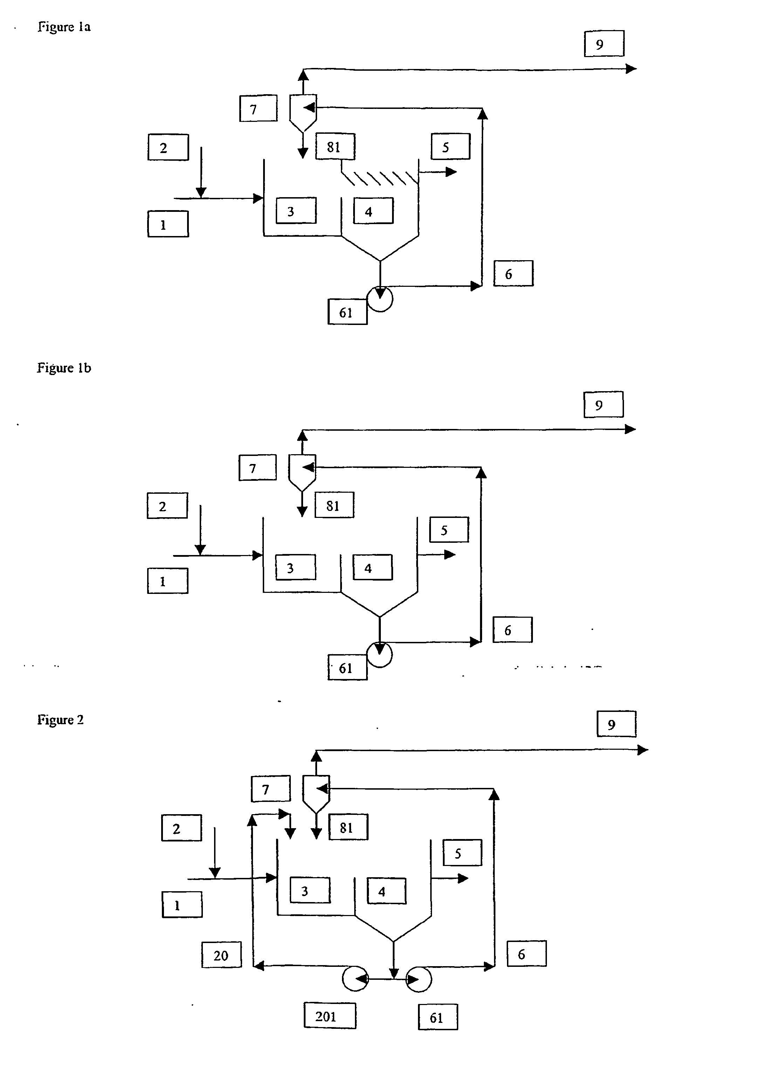

Les figures 1a et 1b précisent le schéma de ce type de technologie de floculation décantation lestée de ballast :

Une arrivée d'eau brute à traiter 1, avec une zone de coagulation (ici représentée par la portion de conduite d'eau située entre l'entrée du réactif coagulant et la zone de floculation 3) par un réactif coagulant amené par le moyen 2; l'eau coagulée est amenée dans une zone de floculation 3 où elle est floculée, à l'aide d'un réactif floculant éventuel, autour de grains d'un ballast (généralement du microsable) insoluble dans l'eau et injecté dans ou en amont de la floculation ; L'eau floculée est alors amenée dans une zone de décantation 4, munie (figure 1a) ou non (figure 1b) de lamelles de décantation ou de tout autre dispositif d'aide à la décantation jouant un rôle similaire, dans laquelle les flocs lestés de ballast décantent rapidement et d'où l'eau séparée des flocs est extraite en surverse du décanteur.

Les boues lestées de ballast sont pompées par le moyen de relevage 61(généralement une pompe, éventuellement par un "air-lift" jouant un rôle de relevage équivalent) et envoyées à un moyen 7 permettant d'extraire les boues produites 9 séparées du ballast recyclé par la sousverse 81 dans ou en amont de la floculation. Ce moyen 7 est usuellement constitué d'un hydrocyclone qui enlève efficacement le ballast (envoyé en sousverse) des boues extraites sortant en surverse. Dans un hydrocyclone, les boues entrantes se répartissent entre sousverse et surverse dans un rapport lié au rapport diamètre de sousverse sur diamètre de surverse.

Les procédés décrits dans ces deux brevets ne précisent pas les choix de séparation ballast/boues effectués, qui peuvent, suivant les besoins de traitement spécifiques à chaque mise en oeuvre particulière, privilégier pour une perte en ballast acceptable donnée :
- soit la minimisation de la consommation électrique, qui, avec un étage de séparation simple par hydrocyclone conduit dans la pratique à un recyclage de matières en suspension (MES) des boues en sousverse d'environ 10% à 20% par rapport au flux de MES entrant dans l'hydrocyclone, et à des pertes en ballast de l'ordre de 1 à 3 g/m³ d'eau traitée ;
- soit la recirculation des boues, par exemple pour augmenter par ce biais la concentration des boues dans l'appareil, et donc leur concentration dans l'extraction, ou pour augmenter le temps de séjour des boues dans l'installation, ce qui peut être utile, notamment lorsque l'on cherche à maximiser l'utilisation de Charbon Actif en Poudre (CAP) injecté pour éliminer des goûts, odeurs, ou matières organiques diverses en amont de l'unité de floculation décantation à floc lesté.

Dans le cas d'utilisation d'un étage de séparation simple par hydrocyclone, on pourra ainsi recirculer jusqu'à au moins 40% des boues en sousverse, avec toutefois la nécessité d'une dépense énergétique supérieure, pour compenser les moins bonnes performances de séparation de l'hydrocyclonage dans ces conditions de fonctionnement.

L'utilisation d'un système de séparation boues-ballast par un étage d'hydrocyclonage simple impose donc un choix entre les paramètres consommation énergétique, consommation de ballast et concentration des boues, choix qui sera différent suivant l'objectif principal recherché par chaque réalisation.

Le brevet FR2758812 publié le 31 juillet 1998, schématisé sur la figure 2, apporte une modification aux dispositifs prévus dans les brevets ci-dessus en leur ajoutant une boucle de recirculation directe 20 d'une partie du mélange décanté constitué de ballast et de boues vers la floculation, sans faire passer cette partie du mélange décanté ballast plus boues par les organes de séparation boues/ballast prévus dans ces brevets.

Cette boucle de recyclage complémentaire, pour une production donnée de matière en suspension à extraire et en considérant à titre d'exemple que 50% du débit volumétrique boues/ballast pompé en bas du décanteur est recyclé directement vers la floculation, et 50% seulement de ce même débit fait l'objet d'une séparation pour enlever le ballast des boues avant leur extraction, permet de doubler approximativement la concentration des boues extraites.

Cette disposition permet donc, lorsque cela est recherché, une augmentation de la concentration des boues extraites du système fonction du ratio entre la part de débit ballast-boue-eau recirculée directement et la part de débit ballast-boue-eau faisant l'objet d'une séparation du ballast des boues finalement extraites du système.

Ce brevet revendique une diminution de la consommation électrique liée au recyclage direct d'une partie du mélange constitué de boues et de ballast, qui demanderait moins d'énergie que celle nécessitée par la séparation boues/ballast effectuée sur tout le débit boues plus ballast repris en fond de décanteur.

Le procédé décrit dans ce brevet comporte cependant divers inconvénients :

Il impose des investissements complémentaires, liés à l'obligation de prévoir deux systèmes de recirculation (pompes plus tuyauterie robinetterie) différents mais avec une concentration importante de ballast dans les deux systèmes (un système de recirculation ballast-boues directe vers la floculation sous basse pression, et un système de recirculation ballast-boues, séparation ballast boue et extraction des boues produites par le traitement)

La concentration du ballast dans le mélange boues/ballast envoyé dans celle des boucles de recirculation qui comporte une séparation reste la même que celle qui serait obtenue sans faire fonctionner la boucle de recirculation directe, c'est à dire importante ; Compte tenu de la concentration supérieure en boues et de la concentration équivalente en ballast, et malgré le débit plus faible de boues ballast à séparer dans le cas de mise en oeuvre d'une boucle de recirculation directe, les pertes en ballast ne seront que difficilement améliorées par rapport aux systèmes de traitement sans recirculation directe.

Compte tenu du système peu efficace de séparation ballast-boues par décantation préconisé dans ce brevet, la taille minimum de ballast exigée pour limiter les pertes de ballast à un niveau acceptable, même si ce niveau restera probablement élevé, est de 200 micromètres, ce qui pose des problèmes de qualité de traitement lors des démarrages de l'installation, par exemple en début de pluie lors du traitement de surverses de réseaux unitaires de temps de pluie (il n'y a pas encore de boues accumulées dans l'ouvrage et le brevet insiste sur le fait que le ballast est de taille trop grosse pour être actif seul, sans boues, sauf à mettre de fortes quantités de ballast pénalisant le procédé). Ce gros diamètre de ballast coûte également plus cher en énergie d'agitation dans les bacs de floculation pour maintenir le ballast en suspension et en éviter le dépôt en fond de cuves.

L'un des objectif de la présente invention est de proposer des dispositions permettant, simultanément dans le cas idéal :
- d'extraire du système de traitement les boues produites à forte concentration (on entendra ici par « forte concentration » des concentrations supérieures à 5 g/L, préférentiellement 10 g/L, et en tous cas supérieures à celles qui résulteraient d'un traitement de la recirculation boues/ballast par hydro-cyclonage simple sans recherche de recirculation des boues par la sousverse de l'hydro-cyclone ou du système similaire de séparation ballast boues installé) ;
- de minimiser les pertes en ballast entraîné dans les boues sortant du système par rapport aux systèmes décrits dans les brevets cités précédemment ;
- de minimiser les dépenses d'investissement correspondantes, et notamment d'éviter les dépenses liées à une boucle complémentaire de recirculation directe du mélange boues plus ballast, telle que celle décrite dans le brevet FR2758812, dépenses qui s'additionnent au coût des systèmes de récupération du ballast décrits dans ce brevet;
- de maintenir les dépenses énergétiques de recirculation et séparation ballast-boues aux niveaux raisonnables obtenus par les techniques décrites dans les brevets ci dessus, sans nécessiter l'utilisation de ballast de diamètre supérieur à 200 micromètre comme exigé par le procédé décrit dans le brevet FR2758812, qui augmentent les dépenses énergétiques de maintien en suspension du ballast dans la zone de floculation et posent des problèmes de qualité de traitement avant mise en place d'un stock de boue suffisant.

Un autre objectif de la présente invention est de permettre, par utilisation des dispositions prévues pour les objectifs ci dessus, ou par d'autres dispositions, une amélioration de l'utilisation du Charbon Actif en Poudre (CAP), ou d'autres produits granulaires actifs, qui serait injecté dans le système en vue d'éliminer un ou plusieurs paramètres de pollution donné, tel que, pour éliminer des goûts, des odeurs, ou encore des polluants tels que des pesticides et autres matières organiques indésirables adsorbables sur le charbon actif.

Ces objectifs sont atteints, totalement ou partiellement, par les moyens suivants, mis en oeuvre séparément ou par toute combinaison entre eux.

La mise en oeuvre des systèmes de traitement décrits dans les brevets FR2627704 et FR2719234 lorsqu'ils utilisent de façon classique un hydro-cyclonage pour séparer le ballast des boues à extraire du système, et lorsqu'une concentration des boues n'est pas recherchée dans le système, se traduit généralement par des taux de recirculation de l'ordre de 3 à 12% du débit d'entrée, par une recirculation de 99,9% environ du ballast en sousverse de l'hydrocyclone, et par une répartition du débit des boues entre surverse et sous verse de l'hydrocyclonage comprise usuellement entre 90% surverse/10% sousverse et 80% surverse/20% sousverse suivant les types d'hydrocyclone et de buses de sousverse et surverse utilisées.

En partant d'une situation de départ utilisant l'une quelconque des technologies connues de floculation décantation lestée, que nous prendrons comme référence ci après sous le nom de système (S), telles que celles décrites dans les brevets brevets FR2627704 et FR2719234., ou toute autre technologie similaire connue de l'homme de l'art, nous décrirons ci après divers moyens complétant ce système (S) et permettant de se rapprocher des objectifs recherchés, avec un point commun consistant à recirculer vers l'amont de la décantation une partie des boues issues de la surverse ou de la sousverse du séparateur boues/ballast (constitué d'un hydrocyclone, décanteur, centrifugeuse, ou tout autre moyen de séparation équivalent), sans boucle de recirculation directe ajoutée comme dans le brevet FR 2758812, et sans nécessiter l'usage de ballast de diamètre supérieur à 200 micromètres pour obtenir une bonne récupération du ballast avant extraction des boues du système. Le balast utilisé aura typiquement un diamètre effectif compris entre 40 et 300 micromètres, préférentiellement entre 80 et 200 micromètres.

Dans tous les exemples qui suivent, le CAP éventuellement injecté suivra approximativement, du point de vue de l'augmentation de son temps de séjour, le sort des boues, le CAP voyant son temps de séjour dans le système, pour une dose d'injection de CAP frais donnée, augmenter proportionnellement à sa concentration (dont l'augmentation sera en fait, d'après l'expérience de la demanderesse, légèrement supérieure à l'augmentation de concentration obtenue pour les boues).

La situation de départ (S) sera celle de la figure 1a, avec un débit d'eau brute à traiter de 1000 m³/h ayant une concentration en matières en suspension de 300 mg/L, et un taux de sable permettant de recirculer 3 kg de sable par m³ d'eau brute entrante. 50 m³/h de mélange boues/ballast sont extraits du fond du décanteur et pompés vers un hydrocyclone extrayant 40 m³/h (soit 80% du débit entrant dans l'hydrocyclone) de boues à 8,4 g/L en surverse de l'hydrocyclone, et recyclant à partir de la sous verse de l'hydrocyclone vers la floculation 10 m³/h d'un mélange de sable concentré à 300 kg/m³ et de boues à 8,4 g/L.

En admettant que l'on recherche une concentration de boues d'environ 17 g/L dans les boues extraites, on pourra augmenter la concentration de boues extraites jusqu'à 16,8 g/l en n'extrayant du fond du décanteur que 25 m³/h de mélange boues/ballast, mais cela portera la concentration de sable en sousverse de l'hydrocyclone à 600 kg/m³, concentration qui est, pour l'hydrocyclone qui était utilisé lors de l'essai, une limite à ne pas dépasser, car mettant en cause la qualité de séparation.

Un premier moyen (A) proposé par l'invention pour se rapprocher de l'objectif recherché en augmentant la concentration des boues extraites à environ 17 g/L au moins en restant loin des 600 kg/m³ de concentration de ballast en sousverse de l'hydrocyclone consistera à choisir un moyen de séparation ballast-boues (hydrocyclones ou bassin de décantation ou tout autre moyen similaire) maximisant la quantité de boues recirculées en sousverse, tout en maintenant une qualité de séparation boues/ballast limitant les pertes de ballast avec les boues de surverse.

Ce moyen a été utilisé par la Demanderesse en utilisant des hydrocyclones réglés pour obtenir des ratio de boues surverse/sousverse allant jusqu'à 60% surverse/40% sousverse, permettant, pour le cas d'exemple indiqué ci dessus, de porter la concentration des boues extraites de 8,4 g/L (dans le cas du ratio surverse/sousverse 80/20, avec 50 m³/h extraits en fond de décanteur et une concentration de ballast en sous verse de l'hydrocyclone de 300 kg/m³) à 17 g/L (pour le ratio surverse/sousverse 60/40, avec 33,3 m³/h extraits du fond du décanteur, et une concentration de ballast en sous verse de l'hydrocyclone de 227 kg/m³).

Ce moyen a l'avantage d'augmenter la concentration des boues extraites du système sans demander d'investissement complémentaire de boucle de recyclage direct, et en travaillant avec une concentration de ballast dans les sousverse diminuée par rapport au schéma de départ, améliorant la courbe de partage de l'hydro-cyclone et diminuant corrélativement les pertes en ballast.

Ce moyen demandera l'utilisation d'un débit de la pompe de recirculation de l'ordre de 66% de celui du schéma (S) de départ tout en augmentant la concentration des boues extraites par un facteur de plus de 2 dans l'exemple pris en référence.

La figure 1 peut étayer la description du moyen A : il suffit simplement, pour illustrer la mise en oeuvre de ce moyen avec un hydrocyclone comme moyen de séparation, d'augmenter le rapport diamètre de sousverse sur diamètre de surverse de l'hydrocyclone jusqu'au niveau recherché de recyclage des boues par la sousverse, et d'adapter les caractéristiques de la pompe au régime nécessaire pour maintenir une efficacité de récupération du ballast conforme aux exigences.

Un second moyen (B) proposé par l'invention consiste à recycler une partie de la surverse du moyen de séparation (hydrocyclones ou bassin de décantation ou tout autre moyen similaire) vers l'amont de la floculation.

Ce moyen, dans le cas d'un recyclage de 50 % de la surverse vers l'amont de la floculation, permet une augmentation de la concentration des boues extraites de 8,4 g/l dans le schéma de base jusqu'à 16,9 g/L en conservant la concentration de ballast dans les sousverse du moyen de séparation au niveau de 300 kg/m³.

Ce moyen présente également l'avantage d'augmenter la concentration des boues extraites du système sans demander d'investissement complémentaire de boucle de recyclage direct (pompe ..), avec toutefois la limite imposée par la limitation à une valeur raisonnable de la concentration de ballast dans la sousverse du moyen de séparation.(600 kg/m³ dans le cas du type d'hydrocyclone utilisé pour les essais ici décrits).

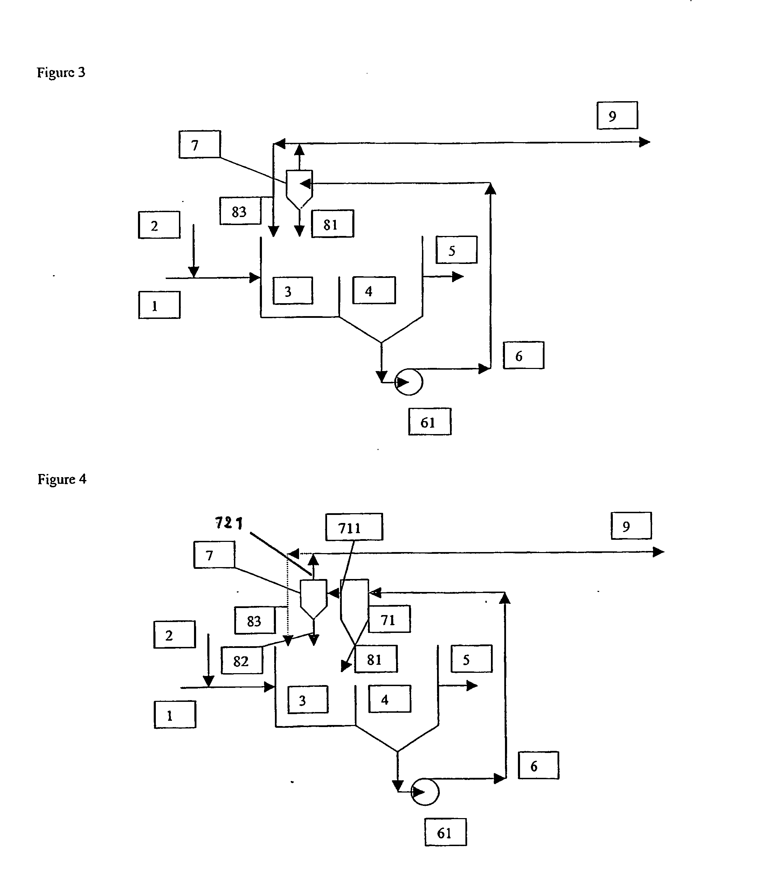

Ce moyen est décrit dans la figure 3, dans laquelle un recyclage 83 des boues de surverse du moyen 7 est ajouté par rapport aux figures 1a ou 1b.

Bien entendu, il ne s'agit que d'une représentation schématique : tout moyen nécessaire connu de l'homme de l'art pour répartir la surverse entre extraction des boues 9 et recyclage des boues 83 pourra être prévu. Cette répartition pourra notamment se faire en utilisant plusieurs hydrocyclones en parallèle, dont les uns auront leur surverse extraite du système, et les autres auront leur surverse entièrement recyclée.

Les boues recyclées par l'intermédiaire de 83 s'ajouteront à celles qui sont recyclées dans la sousverse 81 avec le ballast séparé des boues.

Un troisième moyen (C) proposé par l'invention consiste à combiner les moyens (A) et (B) précédents pour augmenter considérablement la concentration des boues extraites sans dépasser les concentrations limites en ballast admissibles en sousverse du moyen de séparation, afin de maintenir les pertes en ballast au niveau limite choisi.

La figure 3 convient également à la compréhension du moyen (C), mis en oeuvre par une augmentation du ratio diamètre de sousverse sur diamètre de surverse du moyen 7, afin de faire passer une plus grande quantité de MES de boues en sousverse 81.

Un quatrième moyen (D) proposé par l'invention consiste à séparer en deux étages au moins le moyen de séparation 7 boues/ballast prévu pour récupérer le ballast et le recirculer avant extraction des boues du système.

Pour ce faire, l'invention prévoit (voir figure 4) :

Dans un premier temps de faire circuler le mélange boues/ballast extrait du décanteur dans un premier moyen de séparation ballast boue 71 de type décanteur gravitaire statique, hydrocycloné ou centrifugeuse, préférentiellement rustique, du type hydrocyclone basse pression ou décanteur gravitaire statique, utilisant une faible énergie de séparation pour séparer plus de 10% des boues en sousverse 81, préférentiellement de 30% à 70% des boues en sousverse, et encore plus préférentiellement autour de 50% des boues en sousverse de ce premier moyen de séparation, tandis que le ballast sera grossièrement séparé pour passer en sousverse 81 dans un ratio pondéral ballast de sousverse sur ballast de surverse supérieur au ratio volumétrique boues de sousverse sur boues de surverse, de façon préférentielle, dans un ratio sousverse/surverse supérieur à 60%, ou encore plus préférentiellement supérieur à 90%.
Ce premier moyen de séparation pourra être équipé de dispositifs, non représentés sur les schémas, améliorant le cassage de la liaison ballast-floc de boue, pour faciliter le passage préférentiel du ballast en sousverse de ce moyen. Ces dispositifs pourront se limiter au cassage du floc entraîné par le passage dans la pompe et le circuit de recirculation, ou être complété par des grilles ou écrans perforés placés dans le circuit de recirculation en amont du premier moyen de séparation, ou dans ce premier moyen de séparation.

Dans un deuxième temps, la surverse 711 du premier moyen de séparation préférentiellement rustique est envoyée dans un second moyen de séparation 72 boues/ballast plus performant, de type hydrocyclone ou centrifugeuse, pour retirer de façon efficace le ballast restant dans la surverse 721 des boues à extraire du système.

Cette séparation sera particulièrement efficace, car le premier séparateur 71 aura permis de considérablement diminuer la concentration du ballast dans le mélange entrant via 711 dans le second séparateur 72, et l'on sait que les hydrocyclones, notamment, ont une efficacité de séparation diminuant avec la concentration en matière solides dans la sousverse.

Par ailleurs l'usure du second moyen de séparation 72, particulièrement de sa sousverse 82, sera fortement diminuée grâce à la relativement faible concentration de ballast y transitant sous «haute» énergie.

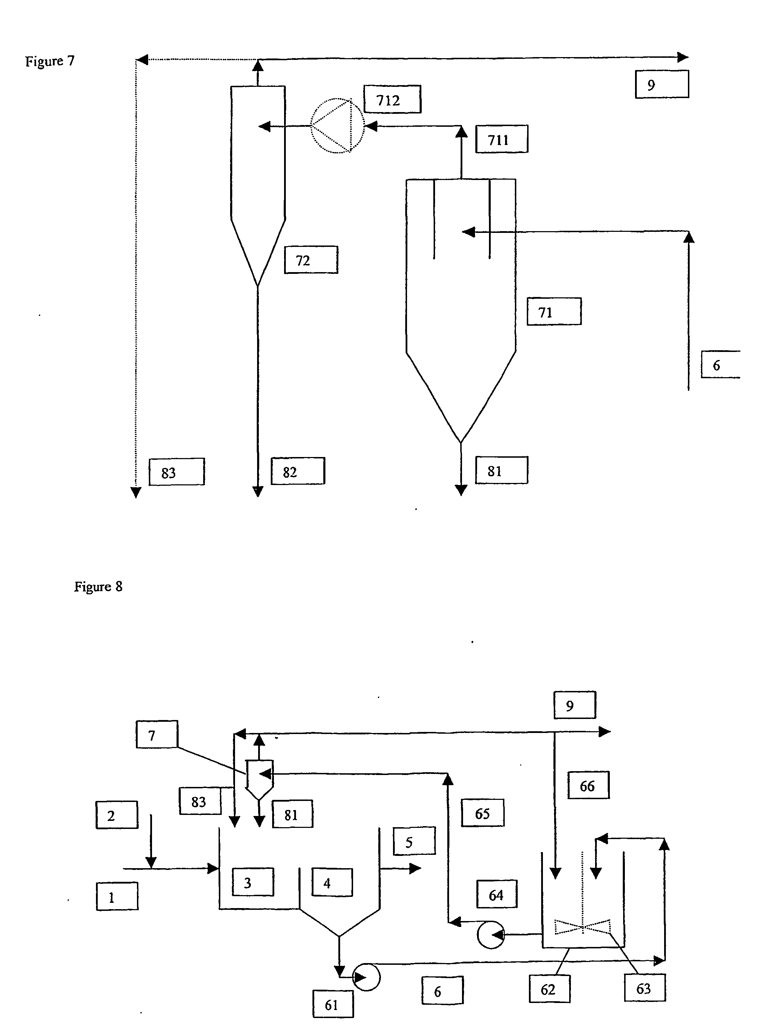

On pourra enfin jouer sur les paramètres de définition et de fonctionnement du second moyen de séparation 72 pour optimiser le système en fonction des priorités de fonctionnement :
- si l'on désire maximiser la récupération du ballast pour en minimiser les départs avec les boues extraites, on utilisera un système à haute énergie de séparation, par exemple en intercalant une pompe 712 (voir figure 7) entre les moyens de séparation 71 et 72, ou encore en augmentant la puissance de la pompe 61 pour lui permettre d'assurer une pression suffisante à l'entrée du moyen de séparation 72 pour garantir la limitation recherchée des pertes en sable;
- si l'on désire minimiser l'énergie consommée, on profitera de la faible concentration de ballast entrant dans le second système de séparation 72 pour séparer le ballast avec une efficacité équivalente à celle consommée dans le système de référence (S), mais une dépense énergétique inférieure. Dans ce cas, on ne disposera généralement pas de pompe complémentaire entre 71 et 72, et on adaptera les caractéristiques de la pompe 61 à son nouveau travail ;
- si l'on désire augmenter encore la concentration des boues extraites on disposera de la possibilité d'augmenter le débit de boue en sous verse de l'un ou l'autre ou des deux moyens de séparation, ou encore de la possibilité de recycler une partie de la surverse du second moyen, ou de celle du premier moyen, ou encore d'une partie de chacune de ces deux surverses.

On remarquera que cette combinaison de deux moyens de séparation successifs limite singulièrement les risques de perte de ballast.

En effet, le premier moyen de circulation 71 aura une sousverse 81 dans laquelle passera une importante partie du débit de boue, donc de grand diamètre limitant intrinsèquement les risques de bouchage en cas de passage de gros objets dans le circuit.

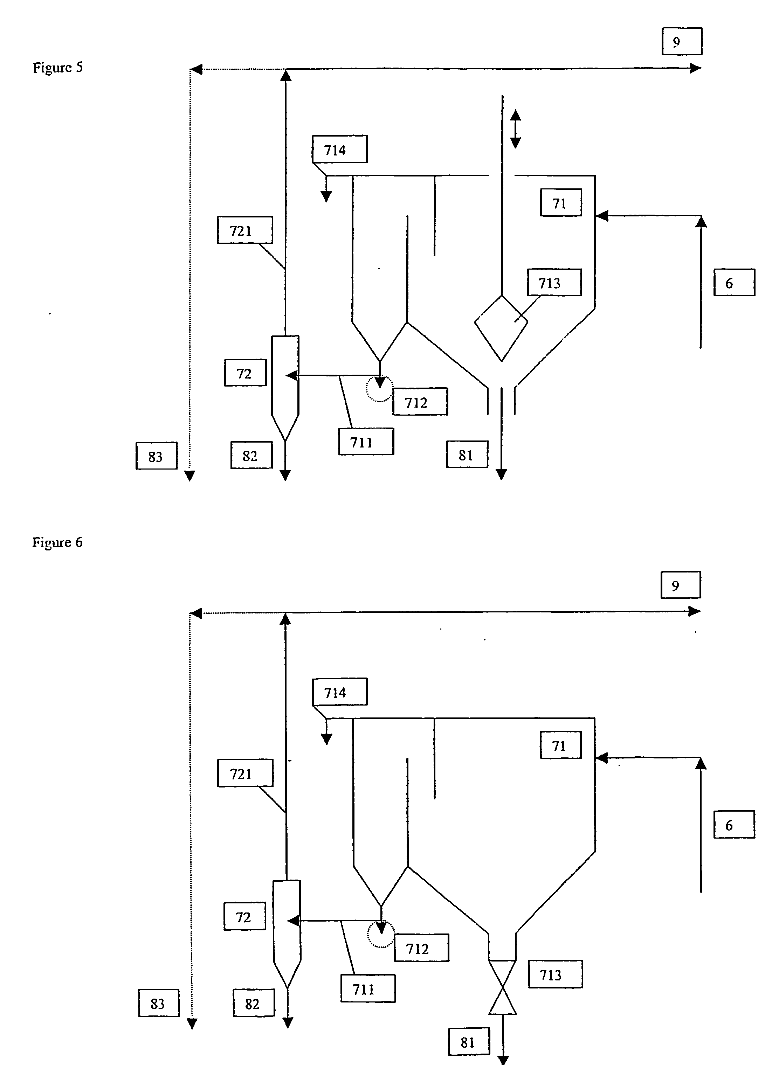

Il est en outre possible de prévoir, éventuellement, un moyen simple de débouchage de cette sousverse 81, par exemple en munissant cette sousverse d'un orifice de section variable (vanne, comme indiqué en figure 6, ou clapet, comme indiqué en figure 5), maintenu partiellement ouvert en fonctionnement normal, et totalement ouvert périodiquement durant un moment bref (quelques secondes ou dizaines de secondes) pour évacuer les encombrants éventuels. Ce dispositif pourra éventuellement être également prévu sur le moyen de séparation 72.

Enfin, en cas de bouchage de l'un quelconque des orifices d'entrée ou de sortie du second moyen de séparation 72, qui n'a la charge de séparer qu'une fraction modeste (moins de 30%, préférentiellement moins de 10%) du ballast introduit dans le circuit de recirculation 6, cette fraction limitée du ballast circulant sera au pire perdue pendant le temps qui s'écoulera avant intervention, qui pourra être déclenchée rapidement, par exemple sur détection de non-débit sur l'un quelconque des circuits issus des surverse 721 et sous verse 82 du second moyen de séparation 72.

Un cinquième moyen (E), pouvant être combiné avec l'un quelconque des moyens précédents pour augmenter la concentration des boues dans le système (notamment pour améliorer les performances de l'injection de charbon actif en poudre par augmentation de son temps de séjour dans le système), ou pour augmenter la concentration des boues extraites, est proposé par la présente invention.

Ce moyen (voir figure 8) consiste à interposer un bac 62, préférentiellement muni de moyens d'homogénéisation tels qu'un ou plusieurs agitateur 63 pour maintenir une concentration homogène en boues et en ballast dans ledit bac 62, dans lequel est injecté, gravitairement ou à l'aide d'une pompe 61, le mélange boues/ballast extrait de la zone de décantation 4, ainsi qu'une partie de la surverse du moyen de séparation 7, constituée de boues séparées du ballast, recirculée dans le bac 62 pour diminuer la concentration de ballast dans celui ci.

Une pompe 64 extrait le mélange boues/ballast du bac 62 (à un débit égal au débit ballast plus boue extrait de la zone de décantation ajouté du débit de boues recirculé via 66 à partir de la surverse du moyen de séparation 7), pour l'envoyer au moyen de séparation boues/ballast 7.

Ce moyen (E) permet d'augmenter la concentration des boues en diminuant le taux d'extraction du mélange boues/ballast du fond de la zone de décantation 4, sans augmenter la concentration du ballast dans le mélange arrivant au séparateur 7.

La concentration de ballast en sousverse (et par corrélation directe, en entrée) du moyen de séparation 7 constituant une limite de bon fonctionnement de ce moyen de séparation, la dilution du ballast par un recyclage d'une partie des boues traitées constitue un moyen utile pour permettre l'augmentation recherchée de concentration des boues extraites sans augmentation de la concentration de ballast dans le séparateur 70, et donc en maintenant un niveau acceptable de perte de ballast.

On notera que ce moyen (E) peut parfaitement se combiner avec les autres moyens (A) à (D) décrits ci-dessus, en fonction des exigences de concentration de boues extraites et de pertes de ballast admises.

Il sera notamment possible de combiner les moyens (D) et (E) afin de minimiser à la fois les débits à traiter dans le moyen de séparation poussée 72 (hydrocyclone ou centrifugeuse) et la concentration de sable dans ce moyen.

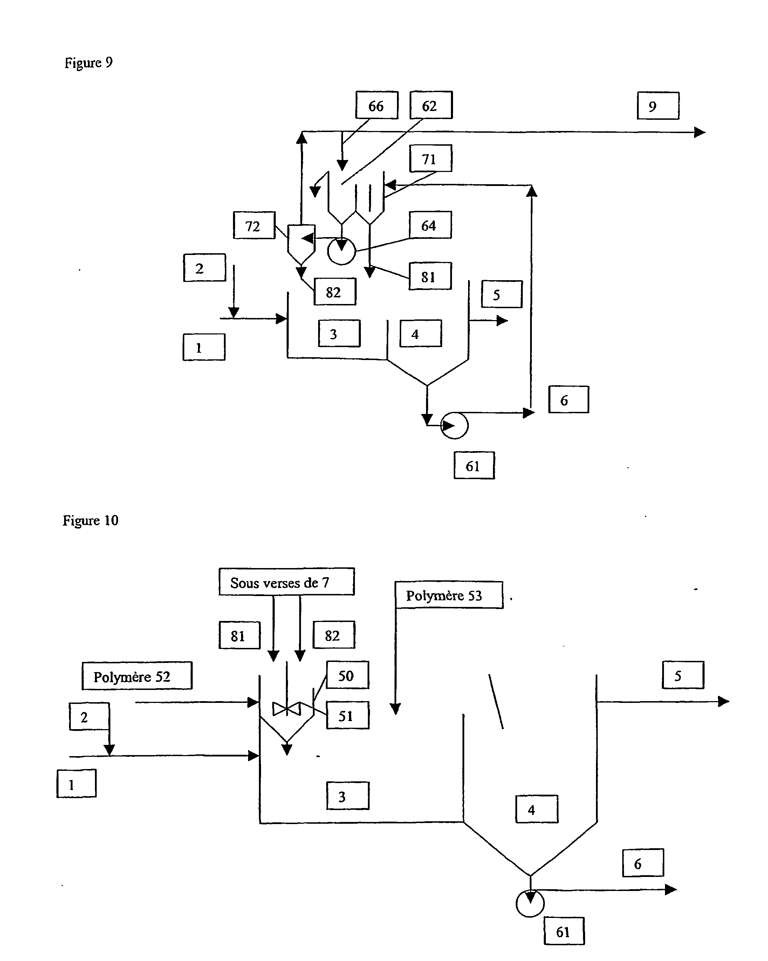

Ceci est réalisé (voir figure 9) en combinant une séparation initiale sommaire de plus de 70% du ballast (typiquement 90%) dans le moyen 71 (décanteur gravitaire ou cyclone basse pression de type vortex) avec une recirculation de boues (séparées du ballast) 66 pour introduire avec la pompe 64 un mélange très dilué en ballast mais concentré en boues dans le moyen de séparation poussée sous pression 72, gagnant ainsi simultanément sur le coût de transport pour recyclage (le seul moyen sous pression ne recevant qu'une partie du débit recirculé), sur l'usure du moyen de séparation 72 (le plus exposé, qui ne reçoit alors qu'un mélange peu concentré en ballast), et sur l'efficacité de séparation de 72 (améliorée du fait de la faible concentration de ballast en entrée).

On notera également qu'il est possible de coupler les moyens proposés dans l'invention avec un circuit de recirculation directe vers la floculation d'une partie du mélange boues/ballast extrait du fond du décanteur.

Dans le cas de l'injection de Charbon Actif en Poudre (CAP) dans le système, le moyen (D) sera particulièrement performant pour recirculer le CAP en recirculant une partie de celui ci en sous verse du premier moyen de séparation proportionnellement à la quantité de boues recirculées par cette même sousverse, tout en améliorant sur le second étage l'efficacité du recyclage grâce à un traitement à haute énergie (généralement par de petits hydrocyclones) de la surverse du premier moyen de séparation, qui permettra un taux de recyclage du CAP supérieur à celui des boues, d'après les observations faites par la demanderesse.

Il sera préféré, dans le cas de l'injection de CAP dans le système, de recycler les boues de surverse, qui contiennent du CAP déjà partiellement usé, très en amont du point d'injection du CAP frais dans le système, de façon à maximiser le piégeage des matières organiques diverses par le charbon le plus usé injecté en amont, et de réserver aux polluants dissous tels que les pesticides, dans le cas de l'eau à potabiliser, l'usage du CAP frais injecté plus en aval, préférentiellement avant injection du polymère, encore plus préférentiellement plus de 10 minutes avant injection du polymère.

Les installations de floculation-décantation à floc lesté utilisent un polyélecirolyte, souvent constitué d'un polymère organique, pour assembler par une action s'apparentant au collage les micro-flocs coagulés en flocs de taille plus importante liés au ballast.

Dans le cas du recyclage de boues après pompage ou séparation dans un organe de séparation boue ballast tels ceux détaillés ci dessus (7, 71, 72), il sera souvent utile de re-floculer au moins partiellement les boues recyclées avant leur dilution par le débit d'eau brute à traiter afin de profiter de flocs préformés dés l'introduction des boues dans la zone de floculation. Il est préféré d'injecter une partie du polymère de floculation dans les sousverses des ouvrages de séparation, et, de façon préférée entre toute, de prévoir une zone de pré floculation du mélange de boues plus ballast recyclés à partir des sousverses 8, 81, 82,.. des moyens de séparation 7, 71 et 72, comme figuré sur la figure 10, où une partie du polymère de floculation est injectée via le moyen 52 dans une zone de pré floculation 50, munie préférentiellement d'un agitateur basse vitesse 51, avant mise en contact des boues refloculées avec l'eau à traiter.

La figure 5 précise un mode de réalisation du moyen D, dans lequel le séparateur 71 est un décanteur simple, soit conçu pour résister à la pression nécessaire au fonctionnement d'un hydrocyclone 72, soit fonctionnant sans pression, une pompe 712 étant alors intercalée à l'alimentation de l'hydrocyclone 72 pour assurer la pression de fonctionnement nécessaire aux performances de séparation recherchées pour 72.

Dans le premier cas, de fonctionnement sans pression du décanteur 71, la répartition des débits entre la sousverse 81 et la surverse 711 de 71 se fera par réglage de la position du dispositif 713 décrit plus loin, le débit d'extraction de boues du système se faisant par exemple par ajustement de la vitesse de la pompe 712, et la différence entre les débits de 712 et celui évacué via 711 étant évacuée par le trop plein 714.

Dans le second cas, de fonctionnement sous pression du décanteur 71, le débit de recirculation global pourra être réglé par la vitesse de la pompe 61, et le débit d'extraction de boues en sortie 9 pourra, par exemple, être réglé par l'ajustement relatif de la vitesse de la pompe 61 et de la position du dispositif 713.

Le dispositif 713 peut, dans sa version la plus simple, être constitué d'une simple vanne de réglage adaptée au passage d'un mélange fortement chargé en sable, comme indiqué en figure 6, qui pourra être partiellement ouverte en fonctionnement normal, pour assurer le débit de sousverse recherché, et totalement ouverte périodiquement pour évacuer les éventuels encombrants.

Le dispositif 713 peut également, comme représenté sur la figure 5, être constitué de dispositifs assurant des fonctions similaires, par exemple en prévoyant une large ouverture de sortie 81 au fond de 71, la section de sortie étant réglée par le déplacement coaxial à cette sortie d'un corps conique ou sphérique pouvant être totalement appliqué à l'orifice de sortie, et le fermer, ou au contraire être périodiquement suffisamment écarté pour totalement dégager la sortie et permettre d'évacuer les encombrants.

Il peut être prévu, si nécessaire, en aval de la sortie 81, un moyen de séparation, comme par exemple un tamis, pour séparer les « éléments grossiers » du ballast que l'on souhaite recycler.

La figure 7 décrit de façon similaire un mode de réalisation préféré du moyen D, dans lequel le moyen de séparation 71 est constitué d'un hydrocyclone basse pression permettant une large recirculation des boues en sousverse 81, de l'ordre de 50% du débit entrant dans 71, tandis que près de 90% du ballast est recyclé en floculation via 81.

Un système de réglage du débit passant par 81, similaire aux dispositifs 713 décrits ci avant peut être prévu.

La surverse 711 de 71 alimente, avec ou non intercalage d'une pompe "booster" 712, un second hydrocyclone 72 dans lequel entrent 50% du débit des boues et seulement 10% du poids de ballast sable recyclés par la ligne 6.

Cet hydrocyclone est donc dans d'excellentes conditions pour séparer de faibles concentrations de ballast à de relativement fortes concentrations de boues sans atteindre les concentrations limites de matières sèches en sousverse.

### Exemples de réalisation :

A titre d'illustration, l'exemple suivant est décliné suivant divers modes modes de traitement de l'état de l'art (cas 1, 3) et suivant l'invention (cas 2, 4 et 5)

Traitement de 1000 m³/h d'un effluent coagulé (ou d'une eau de surface coagulée) contenant 300 mg/L de matières en suspension (MES) pour obtenir une eau traitée à 30 mg/L de MES, en utilisant des réactifs résultant par précipitation de sels et hydroxydes en une augmentation de 25% de la masse de matière sèche des boues par rapport aux MES extraites.

Le taux de sable injecté dans la cuve de floculation (sable recyclé plus sable frais compensant les pertes) est de 3 kg de microsable de diamètre 150 micromètres par m³ d'eau coagulée entrant dans la cuve de floculation.

On cherche à extraire des boues à environ 17g/L, en se donnant une limite de 600 kg/m³(spécifique de l'hydrocyclone employé) pour le sable en sous verse de l'hydrocyclone.

Un récapitulatif des résultats obtenus est fourni en tableau N°1.

Cas 1 : utilisation d'un schéma du type proposé par le brevet FR2627704 ou FR2719234., avec une extraction de 5% du débit d'entrée en fond de décanteur, et une répartition 80%-20% du débit entrant dans un hydrocyclone 7 entre surverse et sousverse : La concentration de boues obtenue est de 8,4 g/L; une extraction de 2,5 % au lieu de 5 % permet une concentration des boues extraites de 16,8 g/L, mais la concentration de sable en sousverse d'hydrocyclone devient trop proche de la limite admise de 600 kg/m³.

Ce cas est illustré par les figures 1a et 1b

Cas 2 : idem cas 1, avec répartition surverse-sousverse dans le rapport 60%-40% Ce cas est également illustré par les figures 1a et 1b

Cas 3 : recirculation directe de 50% du mélange sable boues extrait du fond du décanteur 4, un hydrocyclone 71 étant prévu pour récupérer le sable sur la boucle d'extraction des boues, avec un ratio volumétrique surverse-sousverse de 80-20.

Ce cas est illustré par la figure 2

Cas 4 : idem cas 1, avec recyclage de 50% des surverses de l'hydrocyclone 71

Ce cas est illustré par la figure 3

Cas 5 : idem cas 1, avec un double système de séparation par un premier cyclone de dégrossissage 71 répartissant le débit volumétrique de boues dans le ratio surverse-sousverse de 50%-50%, et le débit massique de sable dans le rapport 10%-90%, et un second cyclone 72 répartissant le débit volumétrique entrant dans le ratio surverse-sousverse de 80%-20%, et éliminant quasiment tout le sable de la surverse extraite.

Ce cas est illustré par la figure 4

Cas 6 : suivant schéma (E) ci dessus ; on extrait du fond du décanteur 3 % du débit d'eau entrant, soit 30m³/h, qui sont mélangés à 20m³/h repris de la surverse de l'hydrocyclone, avant pompage vers l'hydrocyclonage.

Ce cas est illustré par la figure 8.

Cas 7 : combinaison du cas 6 avec un double système de séparation similaire au cas 5 ; on extrait du fond du décanteur 6 % du débit d'eau entrant, soit 60^{m3}/h, qui sont mélangés à 6,6 ^{m3}/h repris de la surverse de l'hydrocyclone, avant pompage des 66,6 ^{m3}/h vers l'hydrocyclonage.

Ce cas est illustré par la figure 9

Le tableau N°1 compare les débits et concentrations de sable et de boues à divers points du schéma, en réglant les paramètres de fonctionnement pour concentrer les boues extraites à environ 17g/L.

Si la limite de concentration en sable en sous-verse est fixée à 600 kg/m³, on constate que :
le cas 1 ne permet d'atteindre les 17 g/L qu'en limite de concentration en sous verse de l'hydrocyclone (600 kg/m³) ;
le cas 3 (correspondant au brevet FR2758812, permet d'obtenir cette concentration de boues extraites avec une concentration de sable égale à 300 kg/m³ en sousverse de l'hydrocyclone, tout comme les cas 4 (réalisé plus simplement par simple recyclage de 50% de la surverse de l'hydrocyclone) et 6 ;
le cas 2 (répartition 60/40 entre surverse et sous verse de l'hydrocyclone) offre l'avantage d'obtenir les 17 g/L recherchés avec une concentration de sable en sousverse de l'hydrocyclone assez faible (230 kg/m³), avec le schéma le plus simple possible, mais au prix d'une consommation d'énergie supérieure ;
les cas 5, et surtout 7, utilisant deux moyens de séparation en série, permettent d'obtenir les 17 g/l de boues extraites avec des concentrations de sable très basse en sousverse du second moyen de séparation (le plus important pour limiter les pertes en sable) : 60 kg/m³ pour le cas 5 et 45 kg/m³ pour le cas 7

Suivant le but recherché, on pourra donc utiliser de façon préférentielle les cas suivants :
Economie d'énergie, moyenne ou forte concentration en boues dans le floculateur : cas 5 et 7
Economie d'investissement, faible concentration en boue dans le floculateur : cas 1, 2 ou 6
Economie d'investissement, moyenne concentration en boue dans le floculateur : cas 4.

**Tableau n° 1**

| Cas | 1 | 2 | 3 | 4 | 5 | 6 | 7 |
|---|---|---|---|---|---|---|---|
| caractéristiques | Surverse / sous-verse 80/20 | Surverse / sous-verse 60/40 | Recirc. Directe 50% | 1+ recirc 50 % surverse | 2 moyens séparation | Bac 62 Intermédiaire. | Bac 62+ 2 moyens séparation |
| Débit eau brute (m³/h) | 1000 | 1000 | 1000 | 1000 | 1000 | 1000 | 1000 |
| Concentration MES dans eau brute (mg/L) | 300 | 300 | 300 | 300 | 300 | 300 | 300 |
| Taux sable (kg recyclé /m³ eau brute) | 3 | 3 | 3 | 3 | 3 | 3 | 3 |
| Débit extrait du fond du décanteur 4 (m^{m3}/h) | 25 | 33,3 | 50 | 50 | 50 | 30 | 60 |
| Débit recirculé directement via 20 (m³/h) | - | - | 25 | - | - | - | - |
| Débit pompe 61 (m³/h) | 25 | 33,3 | 25 | 50 | 50 | 30 | 60 |
| Débit arrivant à moyen 7 ou 71 (m³/h) | 25 | 33,3 | 25 | 50 | 50 | 50 | 66,6 |
| Débit arrivant à moyen 72 (m³/h) | - | - | - | - | 25 | - | 33,3 |
| Concentration sable entrée 71 (kg/m³) | 120 | 91 | 60 | 60 | 60 | 60 | 45 |
| **Concentration sable sous verse 71 (kg/m**^{**3**}**)** | **600** | **227** | **300** | **300** | **108** | **300** | **81** |
| Concentration sable entrée 72 (kg/m³) | - | - | - | - | 12 | - | 9 |
| **Concentration sable sous verse 72 (kg/m**^{**3**}**)** | **-** | **-** | **-** | **-** | **60** | **-** | **45** |
| Concentration boue dans floculation 3 (g/L) | 0,45 | 0,58 | 0,85 | 0,85 | 0,85 | 0,53 | 1 |
| **Concentration boues extraites via 9 (g/l)** | **16,9** | **17,05** | **16,9** | **16,9** | **16,9** | **16,9** | **16,9** |

En résumé, la présente invention vise donc à couvrir tout procédé de traitement d'une eau chargée d'impuretés colloïdales, dissoutes, ou en suspension, pré-coagulée en amont du procédé, par un traitement de floculation décantation lestée de l'eau pré-coagulée comprenant les étapes suivantes consitant à :
- introduire de l'eau coagulée dans une zone de floculation, pour permettre la floculation des microflocs en présence et autour d'un ballast constitué d'au moins un matériau granulaire insoluble plus lourd que l'eau et d'au moins un réactif floculant ;
- introduire le mélange d'eau et de flocs dans une zone de décantation ; séparer l'eau traitée en surverse d'un mélange de boue et de ballast résultant de la décantation des flocs, extraits en sousverse de la zone de décantation
- extraire le mélange de boue et de ballast en sousverse de la zone de décantation et
- envoyer au moins une partie de ce mélange vers un système de séparation boues/ballast permettant d'extraire des boues séparées du ballast, et de recycler dans ou en amont de la zone de floculation le ballast et une partie des boues introduites dans ledit système de séparation,
caractérisé en ce qu'il comprend les étapes consitant à
- envoyer l'ensemble dudit mélange de boues et de ballast provenant de la décantation audit système de séparation boue/ballast;
- faire subir audit mélange de boues et de ballast au moins une concentration en ballast pour les flux sortant recyclés dans ou en amont de la zone de floculation,
- extraire le ballast hors des boues extraites du système de séparation ; en ce que plus de 20% du volume entrant dans le système de séparation boue/ballast est recyclé dans ou en amont de la zone de floculation, après passage dans au moins une partie du système de séparation boues/ballast,
en ce que le ballast est d'un diamètre effectif supérieur à 40 micromètres,
et en ce que les boues extraites du système de traitement ont une concentration supérieure à 5 g/L.

Préférentiellement, le ballast utilisé est d'un diamètre effectif compris entre 80 et 200 micromètres, et en ce que les boues extraites ont une concentration au moins égale à 10g/l;

Avantageusement, le ballast utilisé est constitué d'un matériau de densité réelle supérieure à 2, et est de façon préférée du sable.

Selon une variante de l'invention, le système de séparation boues/ballast utilisé est constitué d'un cyclone ou de plusieurs cyclones installés, en parallèle, récupérant le ballast et plus de 10% des boues en sousverse dudit décanteur. Dans ce cas, ledit cyclone recycle en sousverse 40% ou plus des boues qu'il reçoit, ainsi que plus de 99,5 % du ballast qu'il reçoit.

Avantageusement, au moins une partie de la surverse totale dudit cyclone est recyclée dans ou en amont de la zone de floculation. Dans ce cas, au moins 50% des surverses dudit cyclone est recyclée dans ou en amont de la zone de floculation.

Selon une autre variante de l'invention, ladite séparation boues/ballast est effectuée grâce à un système de séparation boues/ballast constitué d'au moins deux moyens de séparation en cascade, le premier moyen séparant en sousverse recyclée dans ou en amont de la zone de floculation au moins 10% du volume de boues et 60% du poids de ballast entrant dans ce premier moyen, et le second moyen séparant en sousverse recyclée en amont ou dans la zone de floculation le ballast et une part quelconque des boues contenus dans le flux qu'il reçoit de la surverse du premier moyen.

Avantageusement, le premier moyen sépare en sousverse recyclée dans ou en amont de la zone de floculation environ 50% ou plus du volume de boues et 80% ou plus du poids de ballast entrant dans ce premier moyen, et le second moyen sépare en sousverse recyclée en amont ou dans la floculation tout le ballast pratiquement mesurable et au plus 20% des boues contenus dans le flux qu'il reçoit de la surverse du premier moyen.

Selon une variante, le premier moyen de séparation boues/ballast utilisé est constitué d'un décanteur gravitaire simple sous pression, et le second moyen est constitué d'un hydrocyclone recevant la surverse du premier moyen.

Selon une autre variante, le premier moyen de séparation boues/ballast utilisé est constitué d'un décanteur gravitaire simple sans pression, et le second moyen de séparation boues/ballast est constitué d'un hydrocyclone recevant la surverse du premier moyen via une pompe de mise en pression.

Selon encore une autre variante, le premier moyen de séparation boues/ballast utilisé est constitué d'un hydrocyclone sous pression, et le second moyen est constitué d'un hydrocyclone recevant la surverse du premier moyen sans intervention d'une pompe intermédiaire.

Selon encore une autre variante, le premier moyen de séparation boues/ballast utilisé est constitué d'un hydrocyclone sous faible pression, inférieure à celle qui serait nécessaire pour séparer efficacement le ballast des boues dans le deuxième moyen, et le second moyen de séparation boues/ballast est constitué d'un hydrocyclone recevant la surverse du premier moyen via une pompe de mise en pression.

Préférentiellement, le procédé comprend une étape consistant à régler le débit de l'un au moins des moyens de séparation boue-ballast à l'aide d'un dispositif de réglage de débit de sousverse.

Avantageusement, ladite étape de réglage est effectuée grâce à une vanne de réglage.

Préférentiellement, ledit dispositif de réglage comportant une position de semi ouverture en fonctionnement normal, ledit dispositif est périodiquement complètement ouvert, manuellement ou automatiquement, pour évacuer les encombrants amenés par la recirculation et susceptibles de boucher la sousverse du (ou des) moyen(s) équipé(s) du dispositif.

L'invention concerne également tout procédé de traitement d'une eau chargée d'impuretés colloïdales, dissoutes, ou en suspension, pré-coagulée en amont du procédé, par un traitement de floculation décantation lestée de l'eau pré-coagulée comprenant les étapes suivantes consitant à :
- introduire de l'eau coagulée dans une zone de floculation, pour permettre la floculation des microflocs en présence et autour d'un ballast constitué d'au moins un matériau granulaire insoluble plus lourd que l'eau et d'au moins un réactif floculant ;
- introduire le mélange d'eau et de flocs dans une zone de décantation ; séparer l'eau traitée en surverse d'un mélange de boue et de ballast résultant de la décantation des flocs, extraits en sousverse de la zone de décantation extraire le mélange de boue et de ballast en sousverse de la zone de décantation et
- envoyer une partie de ce mélange vers un système de séparation boues/ballast permettant d'extraire des boues séparées du ballast, et de recycler dans ou en amont de la zone de floculation le ballast et une partie des boues introduites dans ledit système de séparation,
caractérisé en ce qu'il comprend les étapes consistant à
- ménager une zone de mélange intermédiaire entre le point d'extraction du fond de la zone de décantation du mélange boues/ballast et avant le système de séparation boues/ballast, cette zone recevant d'une part le mélange boues/ballast extrait de la zone de décantation et d'autre part une recirculation d'une partie des boues provenant de ladite étape de séparation boues/ballast après séparation du ballast qui y était contenu, le débit de cette recirculation étant ajusté pour que la concentration des boues extraites du système soit supérieure à 5 g/L ;
- envoyer le contenu de cette zone de mélange intermédiaire ladite étape de de séparation du ballast des boues.

Selon une variante ce procédé peut-être combiné avec le procédé décrit précédemment.

Selon une variante, comprend une étape consistant à injecter au moins une partie du polymère assistant de floculation dans l'un au moins des circuits recyclant les boues ou le ballast à partir des moyens de séparation boues/ballast.

Avantageusement, le procédé comprend une étape selon laquelle les boues et ballast recyclés vers l'amont de la zone de floculation à partir des sousverses des moyens de séparation sont pré-floculés dans une zone de pré-floculation à l'aide d'un réactif floculant en amont de leur introduction dans la zone de floculation des eaux à traiter.

Egalement avantageusement, le procédé comprend une étape consistant à injecter du charbon actif en poudre frais dans la zone de floculation.

Dans ce cas, le procédé comprend, selon une variante, une étape consistant à adjoindre une boucle de recirculation directe dans ou en amont de la zone de floculation d'une partie du mélange ballast-boues extrait du fond du décanteur.

Selon un aspect de l'invention, ledit charbon actif en poudre frais peut être injecté en amont de la zone de floculation.

Tout ou partie des flux recyclés via les moyens de séparation ou par recirculation directe, contenant du Charbon Actif en Poudre recirculé, peut être envoyé dans ou en amont de la zone de floculation.
Ttout ou partie des flux recyclés via les moyens de séparation (ou par recirculation directe, contenant du Charbon Actif en Poudre recirculé, peut être envoyé dans une zone de contact pour charbon actif usagé, ménagée en amont de l'injection de charbon actif en poudre frais.

## Revendications

1. Procédé de traitement d'une eau chargée d'impuretés colloïdales, dissoutes, ou en suspension, pré-coagulée en amont du procédé, par un traitement de floculation décantation lestée de l'eau pré-coagulée comprenant les étapes suivantes consitant à :
- introduire de l'eau coagulée dans une zone de floculation (3), pour permettre la floculation des microflocs en présence et autour d'un ballast constitué d'au moins un matériau granulaire insoluble plus lourd que l'eau et d'au moins un réactif floculant ;
- introduire le mélange d'eau et de flocs dans une zone de décantation (4) ; séparer l'eau traitée en surverse d'un mélange de boue et de ballast résultant de la décantation des flocs, extraits en sousverse de la zone de décantation
- extraire le mélange de boue et de ballast en sousverse de la zone de décantation et
**caractérisé en ce qu'**il comprend les étapes consitant à :
- envoyer l'ensemble de ce mélange vers un système de séparation (7) boues/ballast permettant d'extraire des boues séparées du ballast, et de recycler dans ou en amont de la zone de floculation la ballast et une partie des boues introduites dans ledit système de séparation,
- faire subir audit mélange de boues et de ballast au moins une concentration en ballast pour les flux sortant recyclés dans ou en amont de la zone de floculation (3),
- extraire le ballast hors des boues extraites du système de séparation (7); **en ce que** plus de 20% du volume entrant dans le système de séparation (7) boue/ballast est recyclé dans ou en amont de la zone de floculation (3), après passage dans au moins une partie du système de séparation boues/ballast,
**en ce que** le ballast est d'un diamètre effectif supérieur à 40 micromètres,
et **en ce que** les boues extraites du système de traitement ont une concentration supérieure à 5 g/L.

2. Procédé suivant la revendication 1, **caractérisé en ce que** le ballast utilisé est d'un diamètre effectif compris entre 80 et 200 micromètres, et **en ce que** les boues extraites ont une concentration au moins égale à 10g/l;

3. Procédé suivant l'une quelconque des revendications 1 et 2, **caractérisé en ce que** le ballast utilisé est constitué d'un matériau de densité réelle supérieure à 2.

4. Procédé suivant l'une quelconque des revendications 1 à 3, **caractérisé en ce que** le ballast utilisé est constitué de sable.

5. Procédé suivant l'une quelconque des revendications 1 à 4, **caractérisé en ce que** le système de séparation (7) boues/ballast utilisé est constitué d'un cyclone ou de plusieurs cyclones installés, en parallèle, récupérant le ballast et plus de 10% des boues en sousverse dudit décanteur.

6. Procédé suivant la revendication 5 **caractérisé en ce que** ledit cyclone recycle en sousverse 40% ou plus des boues qu'il reçoit, ainsi que plus de 99,5 % du ballast qu'il reçoit.

7. Procédé suivant l'une quelconque des revendications 1 à 6, **caractérisé en ce qu'** au moins une partie de la surverse totale (721) dudit cyclone est recyclée dans ou en amont de la zone de floculation (3).

8. Procédé suivant la revendication 7**caractérisé en ce qu'** au moins 50% des surverses dudit cyclone est recyclée dans ou en amont de la zone de floculation (3).

9. Procédé suivant l'une quelconque des revendications 1 à 4, **caractérisé en ce que** ladite séparation boues/ballast est effectuée grâce à un système de séparation boues/ballast constitué d'au moins deux moyens de séparation en cascade, le premier moyen (71) séparant en sousverse recyclée dans ou en amont de la zone de floculation an moins 10% du volume de boues et 60% du poids de ballast entrant dans ce premier moyen, et le second moyen (72) séparant en sousverse recyclée en amont ou dans la zone de floculation le ballast et une part quelconque des boues contenus dans le flux qu'il reçoit de la surverse du premier moyen.

10. Procédé suivant la revendication 9, **caractérisé en ce que** le premier moyen (71) sépare en sousverse recyclée dans ou en amont de la zone de floculation environ 50% ou plus du volume de boues et 80% ou plus du poids de ballast entrant dans ce premier moyen, et le second moyen (72) sépare en sousverse recyclée en amont ou dans la floculation tout le ballast pratiquement mesurable et au plus 20% des boues contenus dans le flux qu'il reçoit de la surverse du premier moyen.

11. Procédé suivant l'une des revendications 9 ou 10 **caractérisé en ce que** le premier (71) moyen de séparation boues/ballast utilisé est constitué d'un décanteur gravitaire simple sous pression, et le second moyen (72) est constitué d'un hydrocyclone recevant la surverse du premier moyen.

12. Procédé suivant l'une des revendications 9 ou 10 **caractérisé en ce que** le premier moyen de séparation (71) boues/ballast utilisé est constitué d'un décanteur gravitaire simple sans pression, et le second moyen de séparation (72) boues/ballast est constitué d'un hydrocyclone recevant la surverse du premier moyen via une pompe (712) de mise en pression.

13. Procédé suivant l'une des revendications 9 ou 10 **caractérisé en ce que** le premier moyen de séparation (71) boues/ballast utilisé est constitué d'un hydrocyclone sous pression, et le second moyen (72) est constitué d'un hydrocyclone recevant la surverse du premier moyen sans intervention d'une pompe intermédiaire.

14. Procédé suivant l'une des revendications 9 ou 10 **caractérisé en ce que** le premier moyen de séparation (71) boues/ballast utilisé est constitué d'un hydrocyclone sous faible pression, inférieure à celle qui serait nécessaire pour séparer efficacement le ballast des boues dans le deuxième moyen, et le second moyen (72) de séparation boues/ballast est constitué d'un hydrocyclone recevant la surverse du premier moyen via une pompe de mise en pression.

15. Procédé suivant l'une quelconque des revendications 1 à 14 **caractérisé en ce qu'**il comprend une étape consistant à régler le débit de l'un au moins des moyens de séparation (71,72) boue-ballast à l'aide d'un dispositif de réglage (713) de débit de sousverse.

16. Procédé suivant la revendication 15, **caractérisé en ce que** ladite étape de réglage est effectuée grâce à une vanne de réglage.

17. Procédé suivant la revendication 15 ou 16 **caractérisé en ce que**, ledit dispositif de réglage (713)comportant une position de semi ouverture en fonctionnement normal, ledit dispositif est périodiquement complètement ouvert, manuellement ou automatiquement, pour évacuer les encombrants amenés par la recirculation et susceptibles de boucher la sousverse du (ou des) moyen(s) équipé(s) du dispositif.

18. Procédé selon la revendication 1 **caractérisé en ce qu'**il comprend les étapes consistant à :
- ménager une zone de mélange intermédiaire (62) entre le point d'extraction du fond de la zone de décantation (4) du mélange boues/ballast et avant le système de séparation (7) boues/ballast, cette zone recevant d'une part le mélange boues/ballast extrait de la zone de décantation (4) et d'autre part une recirculation d'une partie des boues provenant de ladite étape de séparation boues/ballast après séparation du ballast qui y était contenu, le débit de cette recirculation étant ajusté pour que la concentration des boues extraites du système soit supérieure à 5 g/L ;
- envoyer le contenu de cette zone de mélange intermédiaire (62) à ladite étape de séparation du ballast des boues.

19. Procédé suivant la revendication 18 **caractérisé en ce qu'**il est combiné avec le procédé selon l'une quelconque des revendications 1 à 17.

20. Procédé suivant l'une quelconque des revendications 1 à 19, **caractérisé en ce qu'**il comprend une étape consistant à injecter au moins une partie du polymère assistant de floculation dans l'un au moins des circuits recyclant les boues ou le ballast à partir des moyens de séparation boues/ballast.

21. Procédé suivant la revendication 20, **caractérisé en ce qu'**il comprend une étape selon laquelle les boues et ballast recyclés vers l'amont de la zone de floculation (3) à partir des sousverses des moyens de séparation sont pré-floculés dans une zone de pré-floculation (51) à l'aide d'un réactif floculant en amont de leur introduction dans la zone de floculation des eaux à traiter.

22. Procédé suivant l'une quelconque des revendications 1 à 21, **caractérisé en ce qu'**il comprend une étape consistant à injecter du charbon actif en poudre frais dans la zone de floculation (3).

23. Procédé suivant la revendication 22, **caractérisé en ce qu'**il comprend une étape consistant à adjoindre une boucle de recirculation directe dans où en amont de la zone de floculation (3) d'une partie du mélange ballast-boues extrait du fond du décanteur.

24. Procédé suivant la revendication 22 ou 23, **caractérisé en** ledit charbon actif en poudre frais est injecté en amont de la zone de floculation (3).

25. Procédé suivant l'une quelconque des revendications 22, 23 ou 24 **caractérisé en ce que** tout ou partie des flux recyclés via les moyens de séparation ou par recirculation directe, contenant du Charbon Actif en Poudre recirculé, est envoyé dans ou en amont de la zone de floculation (3).

26. Procédé suivant l'une quelconque des revendications 22 à 24 **caractérisé en ce que** tout ou partie des flux recyclés via les moyens de séparation (7)ou par recirculation directe, contenant du Charbon Actif en Poudre recirculé, est envoyé dans une zone de contact pour charbon actif usagé, ménagée en amont de l'injection de charbon actif en poudre frais.

## Patentansprüche

1. Verfahren zum Klären von mit gelösten oder in Suspension befindlichen, kolloidförmigen Verunreinigungen belasteten Abwässern, die vor Durchführen des Verfahrens vorkoaguliert werden und mittels einer Ausflockungs-Dekantations-Behandlung des vorab koagulierten Abwassers, welches die folgenden Schritte umfasst:
- Einleiten des koagulierten Wassers in einen Ausflockungsbereich (3), um das Ausflocken der um einen Ballast vorhandenen Mikroflocken zu ermöglichen, wobei dieser Ballast aus mindestens einem kömigen, nicht löslichen Material, das schwerer als Wasser ist sowie aus zumindest einem Ausflockungsreagens besteht;
- Einleiten des aus Wasser und Flocken gebildeten Gemischs in einen Dekantierungsbereich (4), Trennen des behandelten Wassers durch Überlauf aus einem sich aus dem Dekantieren der Flocken ergebendes Gemisch aus Schlamm und Ballast, wobei die Flocken durch Unterlaufen aus dem Dekantierungsbereich entfernt werden;
- Extrahieren des Gemisches an Schlamm und Ballast durch Unterlaufen des Dekantierungsbereiches;
**dadurch gekennzeichnet, dass** es die folgenden Schritte umfasst:
- Leiten des Gesamtgemisches in ein Schlämme/Ballast-Trennsystem (7), welches das Extrahieren der vom Ballast getrennten Schlämmen ermöglicht, und Rezyklieren des Ballastes sowie eines Teiles der in das Trennsystem eingeleiteten Schlämme innerhalb oder oberhalb des Ausflockungsbereiches;
- das Gemisch aus Schlämmen und Ballast mindestens einer Ballast-Aufkonzentrierung für den innerhalb oder oberhalb des Ausflockungsbereiches (3) rezyklierten Auslauffluss unterwerfen;
- Extrahieren des Ballastes von den im Trennsystem (7) extrahierten Schlämmen,
**dadurch**, dass über 20 % des in das Schlämme/Ballast-Trennsystem (7) einlaufenden Volumens in oder oberhalb des Ausflockungsbereiches (3) rezykliert wird, nachdem es durch zumindest einen Teil des Schlämme/Ballast-Trennsystems gelaufen ist;
**dadurch**, dass der Ballast einen effektiven Durchmesser von mehr als 40 Mikrometer aufweist und,
**dadurch**, dass die aus dem Klärsystem extrahierten Schlämme eine Konzentration von über 5 g/l aufweisen.

2. Verfahren nach Anspruch 1, **dadurch gekennzeichnet, dass** der verwendete Ballast einen effektiven Durchmesser von 80 bis 200 Mikrometer aufweist, und dass die extrahierten Schlämme eine Konzentration von mindestens 10 g/l aufweisen.

3. Verfahren nach einem der Ansprüche 1 oder 2, **dadurch gekennzeichnet, dass** der verwendete Ballast aus einem Stoff mit einer tatsächlichen Dichte von mehr als 2 besteht.

4. Verfahren nach einem der Ansprüche 1 bis 3, **dadurch gekennzeichnet, dass** der verwendete Ballast aus Sand besteht.

5. Verfahren nach einem der Ansprüche 1 bis 4, **dadurch gekennzeichnet, dass** das verwendete Schlämme/Ballast-Trennsystem (7) aus einem Zentrifugalabscheider oder aus mehreren Zentrifugalabscheidem gebildet ist, der/die in parallel angebracht ist/sind und den Ballast und mehr als 10 % der Schlämme aus dem Unterlauf der Dekantiervorrichtung wiedergewinnt/wiedergewinnen.

6. Verfahren nach Anspruch 5, **dadurch gekennzeichnet, dass** der Zentrifugalabscheider im Unterlauf 40 % oder mehr der Schlämme sowie über 99,5 % des Ballastes, die er empfängt, rezykliert.

7. Verfahren nach einem der Ansprüche 1 bis 6, **dadurch gekennzeichnet, dass** mindestens ein Teil des Gesamtüberlaufs (721) des Zentrifugalabscheiders in oder oberhalb des Ausflockungsbereiches (3) rezykliert wird.

8. Verfahren nach Anspruch 7, **dadurch gekennzeichnet, dass** mindestens 50 % des Überlaufs aus dem Zentrifugalabscheider in oder oberhalb des Ausflockungsbereiches (3) rezykliert wird.

9. Verfahren nach einem der Ansprüche 1 bis 4, **dadurch gekennzeichnet, dass** die Schlämme/Ballast-Trennung mit Hilfe eines Schlämme/Ballast-Trennsystems erfolgt, das aus mindestens zwei aufeinander folgenden Trennmitteln besteht, wobei das erste Mittel (71) im rezyklierten Unterlauf mindestens 10 % des Schlammvolumens und 60 % des Ballastgewichtes des in das erste Mittel einlaufenden Ballasts innerhalb oder oberhalb des Ausflockungsbereiches trennt und das zweite Mittel (72) im rezyklierten Unterlauf den Ballast und einen beliebigen Teil der Schlämme, die sich in dem aus dem Überlauf des ersten Mittels empfangenen Flusses befinden, oberhalb oder innerhalb des Ausflockungsbereiches trennt.

10. Verfahren nach Anspruch 9, **dadurch gekennzeichnet, dass** das erste Mittel (71) im rezyklierten Unterlauf etwa 50 % oder mehr des Schlammvolumens und 80 % oder mehr des Ballasts, welche in dieses erste Mittel einlaufen, innerhalb oder oberhalb des Auflockungsbereiches trennt und **dadurch**, dass das zweite Mittel (72) im rezyklierten Unterlauf den ganzen, praktisch messbaren Ballast und höchstens 20 % der Schlämme, die sich in dem aus dem Überlauf des ersten Mittels empfangenen Flusses befinden, oberhalb oder innerhalb des Ausflockungsbereiches trennt.

11. Verfahren nach einem der Ansprüche 9 oder 10, **dadurch gekennzeichnet, dass** das erste verwendete Schlämme/Ballast-Trennmittel (71) aus einem einfachen, unter Druck stehenden Schwerkraftabscheider und das zweite Mittel (72) aus einem Hydrocyclon besteht, welche den Überlauf des ersten Mittels empfängt.

12. Verfahren nach einem der Ansprüche 9 oder 10, **dadurch gekennzeichnet, dass** das erste verwendete Schlämme/Ballast-Trennmittel (71) aus einem einfachen, unter Druck stehenden Schwerkraftabscheider und das zweite Schlämme/Ballast-Trennmittel (72) aus einem Hydrocyclon besteht, welcher den Überlauf des ersten Mittels über eine Druck aufbauende Pumpe (712) empfängt.

13. Verfahren nach einem der Ansprüche 9 oder 10, **dadurch gekennzeichnet, dass** das erste verwendete Schlämme/Ballast-Trennmittel (71) aus einem unter Druck stehenden Hydrocyclon und das zweite Mittel (72) aus einem Hydrocyclon besteht, welcher den Überlauf des ersten Mittels ohne zwischengeschaltete Pumpe empfängt.

14. Verfahren nach einem der Ansprüche 9 oder 10, **dadurch gekennzeichnet, dass** das erste verwendete Schlämme/Ballast-Trennmittel (71) aus einem unter schwachem Druck stehenden Hydrocyclon und das zweite Schlämme/Ballast-Trennmittel (72) aus einem Hydrocyclon besteht, welcher den Überlauf des ersten Mittels über eine Druck aufbauende Pumpe empfängt.

15. Verfahren nach einem der Ansprüche 1 bis 14, **dadurch gekennzeichnet, dass** es einen Schritt umfasst, bei dem der Durchfluss von mindestens einem der Schlämme/Ballast-Trennmittel (71, 72) mit Hilfe einer Vorrichtung (713) zum Regulieren des Unterlaufflusses reguliert wird.

16. Verfahren nach Anspruch 15, **dadurch gekennzeichnet, dass** der Regulierungsschritt mit Hilfe eines Regulierventils erfolgt.

17. Verfahren nach einem der Ansprüche 15 oder 16, **dadurch gekennzeichnet, dass** weil die Reguliervorrichtung (713) eine halboffene Position bei Normalbetrieb aufweist, die Vorrichtung periodisch, manuell oder automatisch, vollkommen geöffnet wird, um die durch das Rezirkulieren angeschwemmten störenden Teile zu entfernen, welche den Unterlauf des (oder der) mit der Vorrichtung ausgerüsteten Mittel verstopfen könnten.

18. Verfahren nach Anspruch 1, **dadurch gekennzeichnet, dass** es die folgenden Schritte umfasst:
- Einrichten eines Zwischenbereichs des Durchmischens (62) zwischen dem Extraktionspunkt am Boden des Bereiches (4) zum Dekantieren des Schlämme/Ballast-Gemischs und vor dem Schlämme/Ballast-Trennsystem (7), wobei dieser Bereich einerseits das aus dem Dekantierbereich (4) extrahierte Schlämme/Ballast-Gemisch und andererseits eine Rezirkulierung eines Teiles der Schlämme aufnimmt, die vom Schlämme/Ballast-Trennschritt, nach Abtrennung des enthaltenen Ballasts, kommen, wobei der Durchfluss dieser Rezirkulierung derart eingestellt wird, dass die Konzentration der aus dem System extrahierten Schlämme größer oder gleich 5 g/l ist;
- Leiten des Inhaltes dieses Zwischenbereichs des Durchmischens (62) zum Trennschritt von Ballast und Schlämmen.

19. Verfahren nach Anspruch 18, **dadurch gekennzeichnet, dass** es mit dem Verfahren nach einem der Ansprüche 1 bis 17 kombiniert wird.

20. Verfahren nach einem der Ansprüche 1 bis 19, **dadurch gekennzeichnet, dass** es einen Schritt umfasst, bei dem mindestens ein Teil des die Ausflockung unterstützenden Polymers in mindestens einem der Kreisläufe injiziert wird, mit dem die Schlämme oder der Ballast ab dem Schlämme/Ballast-Trennmittel rezykliert werden.

21. Verfahren nach Anspruch 20, **dadurch gekennzeichnet, dass** es einen Schritt umfasst, nach dem die aus dem Unterlauf der Trennsysteme kommenden und vor dem Ausflockungsbereich (3) zum Rezyklieren geleiteten Schlämme und Ballast in einem vorherigen Ausflockungsbereich (51) mit Hilfe eines Ausflockungsreagens im Voraus ausgeflockt werden, oberhalb ihres Einleitens in den Ausflockungsbereich des zu behandelnden Abwassers.

22. Verfahren nach einem der Ansprüche 1 bis 21, **dadurch gekennzeichnet, dass** es einen Schritt umfasst, bei dem frisches Aktivkohlepulver in den Ausflockungsbereich (3) injiziert wird.

23. Verfahren nach Anspruch 22, **dadurch gekennzeichnet, dass** es einen Schritt umfasst, der im Zuordnen einer direkten Rezirkulierungsschleife innerhalb oder oberhalb des Ausflockungsbereiches (3) eines Teils des aus dem Boden der Dekantiervorrichtung extrahierten Ballast-Schlamm-Gemischs besteht.

24. Verfahren nach einem der Ansprüche 22 oder 23, **dadurch gekennzeichnet, dass** das frische Aktivkohlepulver oberhalb des Ausflockungsbereiches (3) injiziert wird.

25. Verfahren nach einem der Ansprüche 22, 23 oder 24, **dadurch gekennzeichnet, dass** die über die Trennmittel oder durch direktes Rezirkulieren rezyklierten Flüsse, welche rezirkuliertes Aktivkohlepulver enthalten, teilweise oder vollständig in oder oberhalb des Ausflockungsbereiches (3) geleitet werden.

26. Verfahren nach einem der Ansprüche 22 bis 24, **dadurch gekennzeichnet, dass** die über die Trennmittel (7) oder durch direktes Rezirkulieren rezyklierten Flüsse, welche rezirkuliertes Aktivkohlepulver enthalten, teilweise oder vollständig in einen Kontaktbereich für verbrauchte Aktivkohle geleitet werden, wobei dieser Bereich oberhalb der Stelle angebracht ist, an der das frische Aktivkohlepulver injiziert wird.

## Claims

1. Process for treating water charged with colloidal, dissolved or suspended impurities, pre-coagulated upstream to the process, by a ballasted flocculation and decantation treatment of the pre-coagulated water, comprising the following steps consisting of:
- introducing coagulated water into a flocculation zone (3), so as to enable microflocs to be flocculated in the presence of and around a ballast consisting of at least one insoluble granular material heavier than water and at least one flocculating reagent;
- introducing the mixture of water and flocs into a decantation zone (4); separating the treated water in overflow from a mixture of sludge and ballast resulting from the decantation of flocs, extracted in underflow from the decantation zone;
- extracting the mixture of sludge and ballast in underflow from the decantation zone and
**characterized in that** it comprises steps consisting of :
- conveying all this mixture to a sludge/ballast separating system (7), making it possible to extract the sludge separated from the ballast and to recycle the ballast into or upstream to the flocculation zone together with part of the sludge introduced into the said separating system,
- subjecting the said mixture of sludge and ballast to at least one ballast concentration process for emerging flows recycled into or upstream to the flocculation zone (3),
- extracting the ballast from the sludge extracted from the separating system (7);
**in that** more than 20% of the volume entering the sludge/ballast separating system (7) is recycled into or upstream to the flocculation zone (3) after passage into at least part of the sludge/ballast separating system,
**in that** the ballast has an effective diameter greater than 40 micrometres,
and **in that** the sludge extracted from the treatment system has a concentration greater than 5 g/L.

2. Process according to claim 1, **characterised in that** the ballast used has an effective diameter of between 80 and 200 micrometres, and **in that** the extracted sludge has a concentration of at least 10 g/L.

3. Process according to either of claims 1 and 2, **characterised in that** the ballast used consists of a material with a real density greater than 2.

4. Process according to any one of claims 1 to 3, **characterised in that** the ballast used consists of sand.

5. Process according to any one of claims 1 to 4, **characterised in that** the sludge/ballast separating system (7) used consists of a cyclone or of several cyclones installed in parallel, recovering ballast and more than 10% of the sludge in underflow from the said settler.

6. Process according to claim 5, **characterised in that** the said cyclone recycles in underflow 40 % or more of the sludge that it receives, as well as more than 99.5 % of the ballast that it receives.

7. Process according to any one of claims 1 to 6, **characterised in that** at least part of the total overflow (721) from the said cyclone is recycled into or upstream to the flocculation zone (3).

8. Process according to claim 7, **characterised in that** at least 50 % of the overflows from the said cyclone is recycled into or upstream to the flocculation zone (3).

9. Process according to any one of claims 1 to 4, **characterised in that** the said sludge/ballast separation is carried out by means of a sludge/ballast separating system consisting of at least two separating means in cascade, the first means (71) separating in the underflow recycled into or upstream to the flocculation zone, at least 10 % of the volume of sludge and 60 % of the weight of ballast entering this first means, and the second means (72) separating in the underflow recycled upstream to or into the flocculation zone, the ballast and any part of the sludge contained in the flow that it receives from the overflow from the first means.

10. Process according to claim 9, **characterised in that** the first means (71) separates in the underflow recycled into or upstream to the flocculation zone, approximately 50 % or more of the volume of sludge and 80 % or more of the weight of ballast entering this first means, and the second means (72) separates in the underflow recycled upstream to or into the flocculation zone all the ballast that is practically measurable and at most 20 % of the sludge contained in the flow that it receives from the overflow from the first means.

11. Process according to one of claims 9 or 10, **characterised in that** the first means (71) used for separating sludge and ballast consists of a pressurised simple gravitational decantation device and the second means (72) consists of a hydrocyclone receiving the overflow from the first means.

12. Process according to one of claims 9 or 10, **characterised in that** the first means (71) used for separating sludge and ballast consists of an unpressurised simple gravitational decantation device, and the second means (72) for separating sludge and ballast consists of a hydrocyclone receiving the overflow from the first means via a pressurising pump (712).

13. Process according to one of claims 9 or 10, **characterised in that** the first means (71) used for separating sludge and ballast consists of a pressurised hydrocyclone and the second means (72) consists of a hydrocyclone receiving the overflow from the first means without the intervention of an intermediate pump.

14. Process according to one of claims 9 or 10, **characterized in that** the first means (71) used for separating sludge and ballast consists of a hydrocyclone at a low pressure, lower than that which would be necessary for effectively separating the ballast from sludge in the second means, and the second means (72) for separating sludge and ballast consists of a hydrocyclone receiving the overflow from the first means via a pressurising pump.

15. Process according to any one of claims 1 to 14, **characterised in that** it comprises a step consisting of regulating the flow rate of at least one of the means (71,72) for separating sludge and ballast with the aid of a device (713) regulating the flow rate of the underflow.

16. Process according to claim 15, **characterised in that** the said regulating step is carried out by means of a regulating valve.

17. Process according to claim 15 or 16, **characterised in that**, with the said regulating device (713) having a semi-open position in normal operation, the said device is periodically completely opened, manually or automatically, in order to evacuate the bulky material brought by recirculation and likely to block the underflow from the means with which the device is equipped.

18. Process according to claim 1, **characterised in that** it comprises steps consisting of:
- providing an intermediate mixing zone (62) between the extraction point from the bottom of the zone (4) for decanting the mixture of sludge and ballast and before the sludge and ballast separating system (7), this zone receiving, on the one hand, the sludge/ballast mixture extracted from the decantation zone (4) and, on the other hand, recirculation of part of the sludge coming from the said sludge/ballast separating step after separation of the ballast contained therein, the flow rate of this recirculation being adjusted so that the concentration of sludge extracted from the system is greater than 5 g/L;
- conveying the contents of this intermediate mixing zone (62) to the said step for separating ballast from sludge.

19. Process according to claim 18, **characterised in that** it is combined with the process according to any one of claims 1 to 17.

20. Process according to any one of claims 1 to 19, **characterised in that** it comprises a step consisting of injecting at least part of the polymer assisting flocculation into at least one of the circuits recycling the sludge or ballast from the sludge/ballast separating means.

21. Process according to claim 20, **characterised in that** it comprises a step according to which the sludge and ballast recycled upstream to the flocculation zone (3) from the underflows from the separating means are pre-flocculated in a pre-flocculation zone (51) with the aid of a flocculating reagent upstream to their introduction into the zone for flocculating the water to be treated.

22. Process according to any one of claims 1 to 21, **characterised in that** it comprises a step consisting of injecting fresh powdered activated charcoal into the flocculating zone (3).

23. Process according to claim 22, **characterised in that** it comprises a step consisting of adding a loop for the direct recirculation of part of the ballast/sludge mixture extracted from the bottom of the decantation device directly into or upstream to the flocculation zone (3).

24. Process according to claim 22 or 23, **characterised in that** the said fresh powdered activated charcoal is injected upstream to the flocculation zone (3).

25. Process according to any one of claims 22, 23 or 24, **characterised in that** all or part of the flows recycled via the separating means or by direct recirculation, containing recirculated Powdered Activated Charcoal, is conveyed into or upstream to the flocculation zone (3).

26. Process according to any one of claims 22 to 24, **characterised in that** all or part of the flows recycled via the separating means (7) or by direct recirculation, containing recirculated Powdered Activated Charcoal, is conveyed into a contacting zone for spent activated charcoal, provided upstream to the point of injection of fresh powdered activated charcoal.
